# EUROPÄISCHE PATENTSCHRIFT

(11) **EP 2 441 242 B1**
(45) Veröffentlichungstag und Bekanntmachung des Hinweises auf die Patenterteilung: **02.10.2013**
(21) Anmeldenummer: 10721174.0
(22) Anmeldetag: 08.06.2010
(51) Int. Cl.: H04M 3/56, H04R 27/00

(54) **KONFERENZSYSTEM**
CONFERENCE SYSTEM
SYSTÈME DE CONFÉRENCE

(30) Priorität: 08.06.2009 DE 102009024499
(43) Veröffentlichungstag der Anmeldung: 18.04.2012
(73) Patentinhaber: Sennheiser electronic GmbH & Co. KG, 30900 Wedemark (DE)
(72) Erfinder: HILBICH, Norbert, 31535 Neustadt (DE)
(74) Vertreter: Eisenführ, Speiser & Partner
(86) Internationale Anmeldenummer: PCT/EP2010/057968
(87) Internationale Veröffentlichungsnummer: WO 2010/142661

(56) Entgegenhaltungen:
- EP-A1- 1 622 349
- EP-A1- 1 874 094
- US-A1- 2009 052 643
- Sennheiser electronic GmbH: "Wireless conference System WICOS" 30. April 2009 (2009-04-30), XP002597331 Gefunden im Internet: URL:http://www.sennheiser.com/sennheiser/p roducts.nsf/resources/DF4E279C0F1A7BD6C125 754B0046EC9C/$File/WiCOS_532843_0409_US.pd f [gefunden am 2010-08-19]
- Bosch: "Bosch DCN Wireless Discussion System Data Brochure" 9. März 2008 (2008-03-09), XP002597332 Gefunden im Internet: URL:http://web.archive.org/web/20100819094 254/http://www.dcnwireless.co.uk/bosch_dcn _PDF_downloads/Bosch_DCN_Wireless_DataBook .pdf [gefunden am 2010-08-19]

## Beschreibung

Die Erfindung betrifft ein Konferenzsystem.

Heutige Konferenzsysteme bestehen im Wesentlichen aus Delegiertensprechstellen mit unterschiedlichsten Funktionen und einer Zentrale, die die Verwaltung dieser Delegiertensprechstellen und auch gewisser Zusatzgeräte übernimmt. Neben dieser Verwaltung des Betriebs der Konferenz sowie dem Aufzeichnen von Benutzerdaten, lassen sich an der Zentrale die Grund- und benutzerspezifischen Voreinstellungen für den Betrieb vornehmen. Die am häufigsten benutzte Funktion ist dabei die Lautstärkeeinstellung.

Ein weiteres Merkmal der Zentrale ist, dass sie die Stromversorgung für das gesamte System oder von Teilen des Systems übernimmt. Die Zentrale bietet außerdem Schnittstellen an, mit denen sie mit anderen Systemen in Verbindung treten kann: Daten und Signale an diese liefern oder auch der umgekehrte Fall.

Diese sogenannte Zentrale wird in den meisten Fällen vor einer Konferenz konfiguriert und damit für den Verwendungszweck eingerichtet. Die Zentrale steht meist abseits des eigentlichen Konferenzsystems (z. B. die Delegiertensprechstellen), da sie dort von an der Konferenz nicht teilnehmenden Techniker(n) überwacht und ggf. auf Anweisung des Präsidenten o. ä. bedient werden kann.

In der DE 10 2008 013 975 A1 ist ein drahtloses Konferenzsystem offenbart, das typischerweise eine Zentraleinheit oder Zentrale, eine Präsidentensprechstelle und eine Vielzahl von Delegiertensprechstellen aufweist. Die Präsidentensprechstelle dient dabei dazu, die Delegiertensprechstellen zu steuern. Typischerweise ist jedem Konferenzteilnehmer eine eigene Delegiertensprechstelle zugeordnet. Eine Delegiertensprechstelle weist ein Mikrofon sowie eine Mehrzahl von Bedienelementen auf. Wenn ein Konferenzteilnehmer bzw. ein Delegierter sprechen möchte, so kann er eines der Bedienelemente betätigen und wenn die Delegiertensprechstelle durch die Präsidentensprechstelle freifreigegeben worden ist, dann kann der Konferenzteilnehmer mittels der Delegiertensprechstelle mit dem Rest der Delegierten kommunizieren.

Die Delegiertensprechstellen weisen jeweils einen Transceiver bzw. einen Sender/Empfänger auf. Die Präsidentensprechstelle weist ebenfalls einen Transceiver bzw. einen Sender/Empfänger auf.Die Kommunikation zwischen der Zentrale und der Mehrzahl der Delegierteneinheiten bzw. der Präsidentensprechstelle erfolgt dabei drahtlos, wobei die Kommunikation von der Zentrale zu der Mehrzahl der Delegierteneinheiten als Downlink und die Kommunikation von der Mehrzahl der Delegierteneinheiten bzw. zu der Präsidentensprechstelle zu der Zentraleinheit als Uplink erfolgt.

Bisherige Konferenzsysteme bedürfen somit zu ihrem Gesamtbetrieb mithin auch einer Betreuung durch die Zentrale und dies ist nicht nur personalaufwendig, sondern auch z. T. sehr kompliziert, da eine eigene Kommunikatiohsstrecke zwischen der Zentrale einerseits und dem Konferenzsystem, bevorzugt seine Präsidentenschnittstelle, andererseits notwendig ist, damit die Zentrale die gewünschten Einstellungen vornehmen kann, falls dies notwendig ist.

Sennheiser electronic GmbH: "Wireless conference System WICOS" 30. April 2009 (2009-04-30), gefunden im Internet: URL: http://www.sennheiser.com/sennheiser/products.nsf/resources/DF4E279C0F1 A7BD6C12 5754B0046EC9C/$File/WiCOS_532843_0409_US.pdf beschreibt ein Konferenzsystem mit einer Mehrzahl von Delegiertensprechstellen und einer Präsidentensprechstelle.

Aufgabe der Erfindung ist es, bisher bekannte Konferenzsysteme zu verbessern, sie insbesondere zu vereinfachen und kostensparender einzurichten.

Die Erfindung löst die Aufgabe mit einem Konferenzsystem mit den Merkmalen nach Anspruch 1.

Somit wird ein Konferenzsystem mit einer Mehrzahl von Delegiertensprechstellen und einer Präsidentensprechstelle vorgesehen. Die Präsidentensprechstelle weist eine Konferenz- Steuereinheit zum Steuern des Betriebs des Konferenzsystems und/oder der Mehrzahl von Delegiertensprechstellen auf. So dient die Präsidentensprechstelle als eine zentrale Steuereinheit für das Steuern des Konferenzsystem und der Kommunikation innerhalb des Konferenzsystems zwischen den Präsidentensprechstellen und den Delegiertensprechstellen.

Gemäß einem Aspekt der vorliegenden Erfindung weist die Konferenzsteuereinheit eine Lautstärkeeinstelleinheit zum Einstellen der Lautstärke und/oder eine Klangeinstelleinheit zum Einstellen des Klangs am mindestens einer der Mehrzahl von Delegiertensprechstellen auf. Somit kann durch die Präsidentensprechstelle bzw. die sich darin befindliche Konferenzsteuereinheit die Lautstärke und der Klang der Delegiertensprechstellen eingestellt bzw. gesteuert werden.

Gemäß einem weiteren Aspekt der vorliegenden Erfindung werden die für die jeweiligen Delegiertensprechstellen vorgenommene Lautstärke und/oder Klangeinstellungen gespeichert.

Gemäß einem weiteren Aspekt der vorliegenden Erfindung weist die Delegiertensprechstelle eine Drahtlos-Sende-/Empfangseinheit zur direkten Drahtloskommunikation mit den Delegiertensprechstellen auf.

Gemäß einem weiteren Aspekt der vorliegenden Erfindung weist die Konferenzsteuereinheit eine Frequenzmanagementeinheit zur Frequenzkoordination und zur Vermeidung von Kollision oder Differenzen bei der Drahtloskommunikation auf.

Gemäß einem weiteren Aspekt der vorliegenden Erfindung weist die Präsidentensprechstelle Mittel auf, durch die eine Anzahl der zu aktivierenden Mikrofone und/oder eine Art des Konferenzbetriebs einstellbar ist.

Vorteilhafte Weiterbildungen sind in den Unteransprüchen beschrieben.

Die Erfindung beruht auf dem Gedanken, dass in der überwiegenden Anzahl der Fälle der direkte Zugriff auf die Funktionsbeeinflussung der Zentrale verzichtet werden kann und ihre Funktionen in eine der Sprechstellen, zum Beispiel den Präsidentensprechstellen, integriert werden kann.

Dies erweist sich als vorteilhaft, da der Aufbau eines Konferenzsystems vereinfacht wird und damit auch von Nicht-Fachleuten vorgenommen werden kann. Die übliche Konfiguration eines Konferenzsystems an der Zentrale kann entfallen oder stark vereinfacht werden. Direkt damit verbunden sind eine höhere Akzeptanz seitens der Anwender und ein Zeitvorteil beim Aufbau des Systems - damit ein Kostenvorteil.

Ein weiterer Vorteil ist, dass die meist unästhetisch ausgebildete Zentrale entfernt werden kann, da diese oftmals einen ungewollten Fremdkörper in der Installation darstellt.

Gemäß einem weiteren Aspekt der Erfindung wird das Konferenzsystem als Drahtlos-Konferenzsystem ausgestaltet sein. Hierbei kann ein für die Drahtlos-Kommunikation benötigter Access-Point vorgesehen werden. Dieser Access Point kann ebenfalls beispielsweise in die Präsidentensprechstelle oder eine beliebige andere Sprechstelle integriert werden, um von dort aus die Koordination des Konferenzablaufes abzuwickeln. Im Wesentlichen bedeutet dies, dass die Frequenzkoordination bzw. das Frequenzmanagement zur Vermeidung von Kollisionen/Interferenzen und der damit verbundene Verlust von Daten und Sprachverständlichkeit sowie auch das Aktivieren der Sprechstellen nach der eingestellten Betriebsart in der Präsidentensprechstelle oder einer beliebigen anderen Sprechstelle erfolgen kann.

Bei drahtgebundenen Systemen werden in der Zentrale die Voreinstellungen des Konferenzsystems durch den Techniker vorgenommen. Des Weiteren werden hier z. B. die Lautstärke und der Klang der Delegierten und Präsidentensprechstellen eingestellt. Ein weiteres Merkmal ist, dass die Zentrale die Stromversorgung des Gesamtsystems oder Teile davon übernimmt.

Diese beschriebenen Funktionen lassen sich auch in eine in der Konferenz befindliche Sprechstelle, z. B. die Präsidentensprechstelle, integrieren. Die Sprechstelle weist dann die Möglichkeit der Lautstärkeeinstellung für das Gesamtsystem auf, die mittels eines Rades oder entsprechender Funktionstasten stets im Zugriff des Bedieners ist und damit von ihm direkt angepasst werden kann.

Die Stromversorgung für das Konferenzsystem kann ebenfalls zum Beispiel über der Präsidentensprechstelle erfolgen und mittels eines handelsüblichen oder speziell für das System erstellten Netzteils erfolgen.

Die Präsidentensprechstelle kann - außerhalb des normalen Nutzungsbereiches des Bedieners - Tasten für Voreinstellungen aufweisen, mit deren Hilfe sich diese Voreinstellungen einmalig für den gewünschten Einsatz einstellen lassen. Diese Konfiguration kann auch über eine spezielle Schnittstelle erfolgen. Sollten mehrere Nutzer mit unterschiedlichen Präferenzen das System benutzen wollen, dann können diese jeweils unter der entsprechenden Voreinstellungstaste ihre spezielle Einstellung aktivieren.

Durch das erfindungsgemäße Konferenzsystem wird der Aufbau des Systems vereinfacht und kann auch durch Nicht-Fachleute erfolgen, da keine detaillierten Einstellungen oder gar Programmierungen vorzunehmen sind.

Deutlich stärker als bei drahtgebundenen Systemen tritt hier der Vorteil des neuen Aufbaues bei einem drahtlosen Konferenzsystem zutage. Für ihren Betrieb brauchen diese Systeme stets eine Zentrale, die bei allen am Markt befindlichen Anlagen als separates Gerät konstruktiv erstellt wurde.

Drahtlose Systeme werden sehr häufig eingesetzt in architektonisch durchgestylten Räumlichkeiten, die nachträglich eine Aufwertung erfahren sollen durch die Verwendung eines Konferenzsystems. In diesem Fall wird gefordert, dass ausschließlich die notwendigen Sprechstellen dafür in den Raum eingebracht werden, auf weitere Installationen oder Geräte verzichtet werden soll, insbesondere Kabelverbindungen.

Drahtlose Systeme haben üblicherweise die für ihren Betrieb notwendige Stromversorgung im Gehäuse der Sprechstelle integriert. Die gesamte Verwaltungsorganisation des Systems ließe sich in einer der ohnehin vorhandenen Sprechstellen integrieren; z.B. in der Präsidentensprechstelle.

Der Nutzen ist leicht erkennbar, das System beschränkt sich auf die Komponenten, die ohnehin für seinen Betrieb und die Bedienung der an der Konferenz beteiligten Personen notwendig sind. Damit wird zum einen die Raumästhetik nicht belastet, zum anderen auch der Aufbau vereinfacht, da er sich auf die durch die Geräte der an der Konferenz beteiligten Personen, die Sprechstellen, beschränkt. Hier lassen sich Akzeptanz, Zeitvorteil, Kostenersparnis, und Ästhetik miteinander verbinden.

Voreinstellungen des Systems können wie oben beschrieben mittels vorhandener oder spezieller Tasten direkt an den Sprechstellen erfolgen oder auch, im Falle der zu programmierenden Voreinstellung, auf ebenfalls drahtlosem Wege.

Die von der Zentrale üblicherweise angebotene Möglichkeit der Ein- und/oder Ausspielung von Signalen, der Verbindung zu einem drahtgebundenem System, der Verbindung zu Übersetzungssystemen, automatischen Kameras oder zu Anzeigetafeln, Display u-ä. z.B. im Falle der Darstellung von Abstimmungsergebnissen, können im Bedarfsfalle durch entsprechend ausgebildete Sprechstellen (z. B. Präsidentensprechstelle) oder Zusatzkomponenten erfolgen. Diese werden nur dann in das System integriert, wenn sie tatsächlich benötigt werden. Ansonsten treten sie nicht in Erscheinung.

Mit der Verlagerung der Verwaltung und Steuerung eines Konferenzsystems in eine der Sprechstellen lassen sich wesentliche Vereinfachungen für den Aufsteller des Systems erreichen, Kostenvorteil durch Zeitersparnis realisieren und außerdem architektonische Vorgaben berücksichtigen.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt einen schematischen Aufbau eines Konferenzsystems gemäß einem ersten Ausführungsbeispiel,
- Fig. 2: zeigt ein Blockschaltbild einer Präsidentensprechstelle eines Konferenzsystems gemäß einem zweiten Ausführungsbeispiel,
- Fig. 3: zeigt ein Blockschaltbild einer Präsidentensprechstelle für ein Konferenzsystem gemäß einem dritten Ausführungsbeispiel, und
- Fig. 4: zeigt ein Blockschaltbild einer Präsidentensprechstelle für ein Konferenzsystem gemäß einem vierten Ausführungsbeispiel.

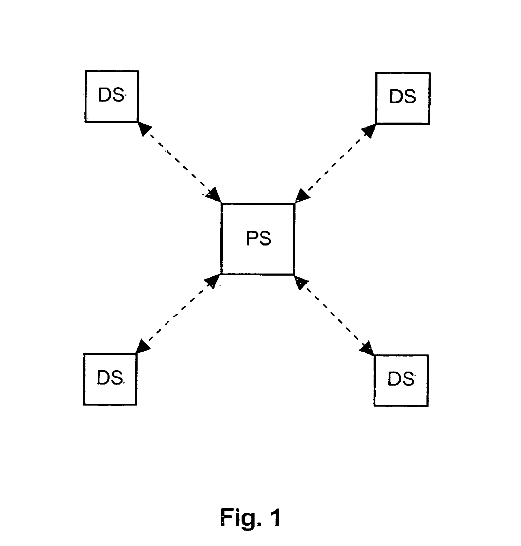

Fig. 1 zeigt einen schematischen Aufbau eines Konferenzsystems gemäß einem ersten Ausführungsbeispiel. Das Konferenzsystem gemäß dem ersten Ausführungsbeispiel weist eine Präsidentensprechstelle PS sowie eine Mehrzahl von Delegiertensprechstellen DS auf. Optional sind die Präsidentensprechstelle PS sowie die Delegiertensprechstellen in einem Raum angeordnet. Vorzugsweise werden sowohl die Präsidentensprechstelle PS als auch die Mehrzahl der Delegiertensprechstellen DS auf Tischen platziert bzw. sind auf Tischen platzierbar. Die Delegiertensprechstellen DS sowie die Präsidentensprechstelle PS weisen mindestens ein Mikrofon M, einen Lautsprecher L sowie optional einen Kopfhörerausgang KA auf. Ferner können die Sprechstellen Bedienelemente BE und optional ein Display D aufweisen.

Das Konferenzsystem gemäß dem ersten Ausführungsbeispiel kann drahtlos und/oder drahtgebunden ausgestaltet sein. Die Präsidentensprechstelle ist hierbei dazu ausgestaltet, die Steuerung der Daten- und Audiokommunikation innerhalb des Konferenzsystems zu steuern.

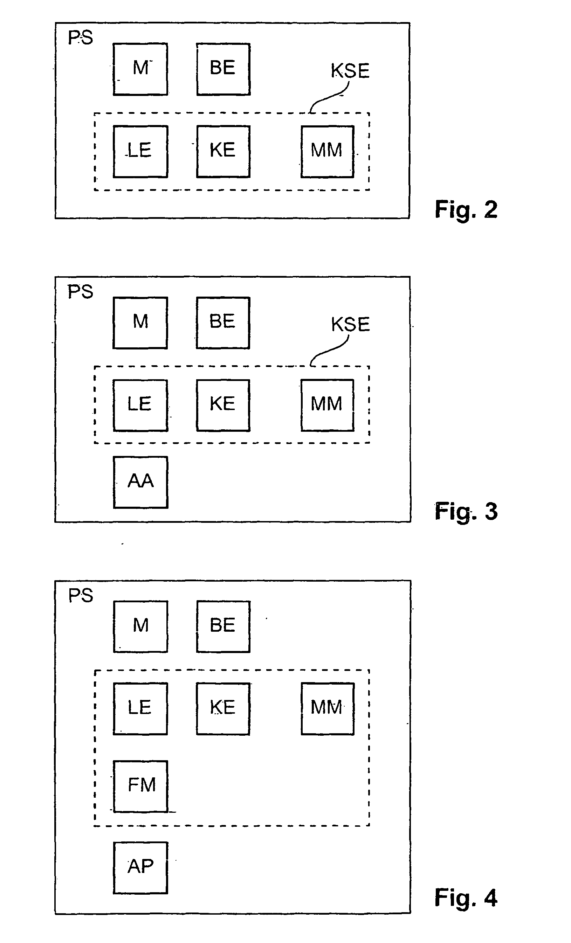

Fig. 2 zeigt ein schematisches Blockschaltbild einer Präsidentensprechstelle für ein Konferenzsystem gemäß einem zweiten Ausführungsbeispiel. Die Präsidentensprechstelle PS weist mindestens ein Mikrofon M, Bedienelement BE, eine Lautstärkeeinstelleinheit LE, eine Klangeinstelleinheit KE und optional eine Multimediaeinheit MM auf. Die Lautstärkeeinstelleinheit LE und die Klangeinstelleinheit KE sind Teil einer Konferenzsteuereinheit KSE. Die Lautstärkeeinstelleinheit LE kann mit den Bedienelementen BE gekoppelt sein und dient zur Einstellung der Lautstärke der Audiowiedergabe des Konferenzsystems bzw. der Wiedergabe auf den Delegiertensprechstellen. Dazu kann das Konferenzsystem die Lautsprecher in den Delegiertensprechstellen DS oder externe Lautsprecher verwenden. Die Klangeinstelleinheit KE ist ebenfalls mit den Bedienelementen BE gekoppelt und dient der Einstellung des Klangs der Audiowiedergabe des Konferenzsystems. Optional weist die Präsidentensprechstelle eine Multimediaeinheit MM auf. Über einen Eingang der Multimediaeinheit kann die Präsidentensprechstelle Multimediadaten bzw. -sequenzen (beispielsweise eine PowerPoint-Präsentation oder Filmsequenzen) aufweisen. Die empfangenen Multimediadaten können über den Multimediaausgang ausgegeben werden, so dass alle Delegierten die Multimediadaten bzw. -sequenzen sehen und/oder verstehen können.

Die Delegiertensprechstellen können über eine Schnittstelle zur Kommunikation mit Computern bzw. PCs verfügen. Wenn die Delegiertensprechstellen über die Computerschnittstelle mittels eines Computers verbunden sind, dann können auf dem Display des Computers bzw. Laptops die Möglichkeiten der Einstellung und/oder Steuerung des Konferenzsystems dargestellt werden. Dies dient insbesondere der Vereinfachung und der Erhöhung der Übersichtlichkeit für den Bediener des Systems. Die Delegiertensprechstellen weisen ferner optional eine Multimediaschnittstelle auf, welche zum Steuern systemfremder Komponenten mittels Zusatzmodulen erfolgen kann. Die Zusatzmodule können beispielsweise zur Einstellung des Raumlichts für eine Präsentation, zum Steuern der Klimaanlage etc. verwendet werden.

In einem ersten Schritt sind alle Sprechstellen auf die gleiche Lautstärkeverstärkung eingestellt.

Beginnt nun eine Konferenz, so ist es durchaus denkbar, dass eine einzelne Sprechstelle von jemandem benutzt wird, der mit relativ leiser Stimme spricht, mit der Folge, dass das, was von dort gesprochen wird, nicht für alle Teilnehmer an der Konferenz verständlich ist.

Erfindungsgemäß kann hier durch die Präsidentensprechstelle PS die Gesamt-System-Lautstärke mittels der Lautstärkeeinstelleinheit LE auf einen gewünschten Wert angehoben werden und da die Präsidentensprechstelle stets von einem Menschen besetzt ist, ist dieser sehr wohl in der Lage, die richtige und angemessene Lautstärke mittels der Lautstärkeeinstelleinheit LE einzustellen, mit der Folge, dass der zu leise sprechende Teilnehmer von allen Teilnehmern der Konferenz verstanden wird, aber auch dann, wenn eine Aufzeichnung der gesamten Konferenz läuft, das gesprochene Wort hinreichen laut genug ist, um auch aufgezeichnet und später wiedergegeben zu werden.

Es ist auch möglich, dass an einer Delegiertensprechstelle jemand sitzt, der sehr nasal spricht oder mit extrem tiefer Stimme spricht. Dann ist es wünschenswert und durch die erfindungsgemäße Klangeinstelleinheit KE der Präsidentensprechstelle möglich, den Klang von der betroffenen Sprechstelle zu beeinflussen, damit eine bestmögliche Verständlichkeit gegeben ist.

Die Klangeinstellung kann auch genutzt werden, wenn in Teilen des Raumes erhöht Störgeräusche auftreten. Mit Hilfe der Klangregelung lassen sich gewisse Frequenzanteile dieser Störungen im Gesamtsystem reduzieren und damit die Sprachverständlichkeit erhöhen.

Zusätzlich kann dafür auch die Einstellung der individuellen Mikrofonempfindlichkeit einzelner Sprechstellen hinzugezogen werden.

Der besondere Vorteil des erfindungsgemäßen Konferenzsystems besteht auch darin, dass die Beeinflussung einer Sprechstelle während der Konferenz durch die Präsidentensprechstelle aktiv vorgenommen werden kann, was z. B. dann besonders wünschenswert ist. Wenn also z. B. bei einer Konferenz der Sprecher an der betroffenen Delegiertensprechstelle wechselt und zuvor ein Sprecher mit sehr lauter Stimme an der Sprechstelle saß und nunmehr durch einen Sprecher mit einer sehr leisen Stimme ersetzt wird, ist offensichtlich, dass der Bedarf, die Lautstärkeeinstellung zu ändern, besonders vorteilhaft für die gesamte Verständlichkeit der Konferenz ist.

Bevorzugt weist die Präsidentensprechstelle zur Einstellung der Lautstärke bestimmte Bedienelemente BE wie beispielsweise Tasten auf, z. B. Tasten mit Pluszeichen bzw. Minuszeichen. Somit kann von der Präsidentensprechstelle aus durch einfache Bedienung der Plustasten die Lautstärke (einer eingeschalteten Sprechstelle) mittels der Lautstärkeeinstelleinheit LE erhöht werden und wenn der erhöhte Lautstärke-Verstärkungsfaktor abgespeichert wird, so ist er dieser konkreten Sprechstelle zuzuordnen, so dass dann, wann immer an dieser Sprechstelle gesprochen wird, der voreingestellte Lautstärke-Verstärkungswert wieder aufgerufen und am Verstärker eingestellt wird.

Die Delegiertensprechstellen können einen Kompressor und/oder einen Limiter zum Ausgleichen von unterschiedlichen Sprechlautstärken der Sprecher aufweisen.

Die Einstellung der Lautstärke des Gesamtsystems erfolgt, um die Audioausgabe an die Gegebenheiten des Konferenzraumes anzupassen. Wenn die Störgeräusche im Raum steigen, dann kann der Präsident mittels seiner Präsidentensprechstelle die Lautstärke des Systems ebenfalls erhöhen. Die Einstellung der Lautstärke erfolgt optional manuell, um ein unkontrolliertes An- und Abschwellen der Laustärke zu vermeiden.

Die Empfindlichkeiten der Mikrofone der Sprechstellen lassen sich individuell einstellen. Hierdurch kann vermieden werden, dass bei einer parallelen Raumbeschallung mit über im Raum verteilten Lautsprechern es zu Rückkopplungsfällen kommen kann. Hierzu kann beispielsweise die Mikrofonempfindlichkeit der Sprechstellen reduziert werden, die sich in der Nähe von rückkopplungsbegünstigten Lautsprechern befinden. Ferner kann durch dieselben Einstellungen der Mikrofonempfindlichkeit auf im Raum befindliche Störquellen eingegangen werden. Derartige Störquellen können beispielsweise Klimaanlagen, Sitzplätze in der Nähe von Fenstern zur Straßenfront etc. darstellen.

Somit kann die Erfindung auch dazu führen, dass dann, wenn über verschiedene Sprechstellen gesprochen wird, eine unterschiedliche Verstärkung an den Lautsprechern erfolgt, je nachdem, über welche Sprechstelle gesprochen wird.

Eine gleiche individuelle Einstellung ist auch am Klang oder an anderen akustischen Parametern mittels der Klangeinstelleinheit KE möglich.

Mithin kann durch optimale Einstellung seitens der Präsidentensprechstelle die Gesamtverständlichkeit jeder einzelnen Sprechstelle optimiert werden, was durch Voreinstellung vor der Konferenz praktisch nicht möglich ist, weil man dann noch nicht die individuelle Stimmenakustik eines Sprechers an einer Sprechstelle kennt und auch nicht weiß, wie sich diese individuelle Sprecherakustik auf die gesamte Raumakustik auswirkt.

Auch können durch die Multimediaeinheit MM oder die erfindungsgemäße Präsidentensprechstelle bestimmte Beiträge, z. B. Power-Point-Präsentationen oder Filmsequenzen oder dergl. zentral zur Abspielung gebracht werden, so dass alle Teilnehmer gleichzeitig diese Information bekommen und gleichzeitig kann auch die gesamte zentrale Präsentation von der Präsidentensprechstelle aus gesteuert werden, d. h. auch z. B. unterbrochen werden, falls einer der Sprecher an einer anderen Sprechstelle eine Unterbrechung signalisiert, was er optisch tun kann oder durch Druck auf eine bestimmte Taste seiner Sprechstelle, die an der Präsidentensprechstelle ein entsprechendes akustisches oder optisches Signal auslöst, so dass an der Präsidentensprechstelle die gewünschte Unterbrechung registriert werden kann.

Fig. 3 zeigt ein Blockschaltbild einer Präsidentensprechstelle für ein Konferenzsystem gemäß einem dritten Ausführungsbeispiel. Das Konferenzsystem gemäß dem dritten Ausführungsbeispiel kann drahtgebunden implementiert werden. Die Präsidentensprechstelle gemäß dem dritten Ausführungsbeispiel weist ein Mikrofon M, Bedienelemente BE, eine Lautstärkeeinstelleinheit LE, eine Klangeinstelleinheit KE und optional eine Multimediaeinheit MM auf. Die Lautstärkeeinstelleinheit LE und die Klangeinstelleinheit KE können Teil einer Konferenzsteuereinheit KSE sein. Die Präsidentensprechstelle weist ferner eine Mehrzahl von Audioausgängen AA auf, welche an die entsprechenden Peripheriegeräte angeschlossen werden können. Alternativ kann dies über Zusatzmodule geschehen, die bei einem drahtlosen System abseits der für die eigentliche Konferenz benötigten Komponenten aufgestellt sein können. Diese Zusatzmodule werden entsprechend der gewünschten Funktion konfiguriert und in das System eingebunden; z. B. Ein- oder Ausspielen von externen Audioquellen oder -senken.

Das Konferenzsystem gemäß dem dritten Ausführungsbeispiel kann somit gänzlich ohne Peripheriegeräte ausgekommen, wobei die Möglichkeit gewisse Funktionen einstellbar zu behalten aber nach wie vor gegeben sein soll, um die Technik an das Konferenzverhalten anpassen zu können. Das hier beschrieben System geht davon aus, dass die Benutzererfahrungen und das Benutzerverhalten dieses Systems nicht verändert werden soll, damit der Nutzer das bereits gelernte anwenden kann, sondern in der bekannten Art und Weise zu erhalten ist und weiterentwickelt werden soll.

Der Gedanke dabei ist, die vielfach für den Betrieb überdimensionierten Systeme, weil sie praktisch alle denkbaren Anwendungen abdecken sollen, so in ihrer Funktionalität zu reduzieren, dass z.B. Funktionen wie Lautstärke, Anzahl der aktiven Mikrofone, Konferenzbetriebsart, von dem Nutzer selbst eingestellt werden können.

Wie im ersten Ausführungsbeispiel, können diese Funktionen beispielsweise in der Präsidentensprechstelle untergebracht und entsprechend eindeutig gekennzeichnet sein.

Der Vorteil für den Betreiber des Systems ergibt sich darin, dass ausschließlich die Geräte zur Konferenz aufgestellt werden müssen, die von den Konferenzteilnehmern auch direkt bedient werden oder zum Mithören der Konferenz benötigt werden. Keine weiteren Peripheriegeräte müssen abseits der Konferenz aufgestellt und betrieben werden.

Ein weiterer Punkt ist, dass das so gestaltete System für seine Aufstellung und seinen Betrieb keinen Techniker benötigt. Da System lässt sich auch von technischen Laien aufstellen und betreiben. Ein Vorteil für Anwendungen aller Art, insbesondere für Leih-Systeme, die an den Konferenzort geschickt werden, um dort von Nicht-Technikern aufgestellt und betrieben werden können. Damit wird das Rationalisierungspotential, das besonders drahtlose System beim Aufbau und Abbau bieten wesentlich gesteigert.

Fig. 4 zeigt ein Blockschaltbild einer Präsidentensprechstelle für ein Konferenzsystem gemäß einem vierten Ausführungsbeispiel. Das Konferenzsystem gemäß dem vierten Ausführungsbeispiel ist als ein Drahtlos-Konferenzsystem ausgestaltet, d. h. die Kommunikation zwischen der Präsidentensprechstelle PS und den Delegiertensprechstellen DS erfolgt drahtlos. Die Präsidentensprechstelle PS gemäß dem vierten Ausführungsbeispiel weist mindestens ein Mikrofon M, Bedienelemente BE, eine Lautstärkeeinstelleinheit LE, eine Klangeinstelleinheit KE, optional eine Multimediaeinheit MM, eine Frequenzmanagementeinheit FM zum Managen der Frequenzen für die Drahtlos-Kommunikation und mindestens eine Drahtlos-Sende-/Empfangseinheit zum drahtlosen Senden und Empfangen von Daten- und Audiosignalen auf. Die Lautstärkeeinstelleinheit LE, die Klangeinstelleinheit KE und die Frequenzmanagementeinheit FM können Teil einer Konferenzsteuereinheit KSE sein. Gemäß dem vierten Ausführungsbeispiel weisen die Delegiertensprechstellen DS entsprechende Drahtlos-Sende-/Empfangseinheiten zur drahtlosen Kommunikation mit der Drahtlos-Sende-/Empfangseinheit in der Präsidentensprechstelle auf. Die Frequenzmanagementeinheit FM dient dazu, ein Frequenzscannen durchzuführen, um Frequenzbänder zu erfassen, die von Störern belegt sind. Ferner kann die Frequenzmanagementeinheit FM dazu ausgestaltet sein, Frequenzbänder für die Drahtloskommunikation zwischen der Präsidentensprechstelle und der Mehrzahl der Delegiertensprechstellen DS entsprechend auszuwählen. Die Frequenzmanagementeinheit kann die Verbindungsparameter der Drahtloskommunikation zwischen der Präsidentensprechstelle PS und den Delegiertensprechstellen überwachen, um eine Änderung der Frequenzkanäle initiieren, wenn die Drahtlosübertragung zu fehlerbehaftet wird.

Optional können die Delegiertensprechstellen spezifische Informationen wie z. B. der Batteriezustand der Delegiertensprechstelle, die Qualität der Verbindung oder die Kennung der Delegiertensprechstelle an die Präsidentensprechstelle übermitteln. Die Präsidentensprechstelle kann ferner dazu ausgestaltet sein, Steuersignale zum Steuern der Delegiertensprechstellen an die Delegiertensprechstellen zu übertragen

Im vorliegenden vierten Ausführungsbeispiel schließt das Integrieren von Funktionen und dafür notwendige Komponenten auch die für drahtlose Konferenzsysteme stets notwendigen Drahtlos-Sende-/Empfangseinheit AP (Access-Point) ein. Diese Sende-/Empfangseinheit kann ebenfalls beispielsweise in die Präsidentensprechstelle integriert werden, um von dort aus die Koordination des Konferenzablaufes abzuwickeln. Im Wesentlichen bedeutet dies, dass durch die Frequenzmanagementeinheit FM eine Frequenzkoordination zur Vermeidung von Kollisionen/Interferenzen und der damit verbundene Verlust von Sprachverständlichkeit wie auch das Aktivieren der Sprechstellen nach der eingestellten Betriebsart in der Präsidentensprechstelle oder einer beliebigen anderen Sprechstelle ermöglicht wird. In der Praxis geschieht dies dadurch, dass die notwendige Kapazität des ohnehin in der betreffenden Sprechstelle vorhandenen Rechners erhöht wird, um die genannten Funktionen mit zu übernehmen.

So kann bspw. in der Frequenzmanagementeinheit FM der Präsidentensprechstelle eine Frequenzscaneinheit FSE vorgesehen sein zum Scannen von vorab bestimmten Frequenzbändern, um Störer in diesen Frequenzbändern zu erfassen. Die Frequenzscaneinheit kann ferner dazu dienen, Frequenzbänder für die Downlink- und Uplink-Kommunikation festzulegen. Dies kann z. B. bei einer Initiierung des drahtlosen Konferenzsystems erfolgen. Alternativ dazu kann dies auch kontinuierlich oder in regelmäßigen Intervallen erfolgen.

Dies erfolgt üblicherweise unmittelbar nach dem Einschalten des Systems gemäß der im System festgelegten Voreinstellungen, die unter anderem die rechtlichen Voraussetzungen für den Betrieb berücksichtigen.

Die Frequenzmanagementeinheit FM der Präsidentensprechstelle kann ferner eine Verbindungsparametereinheit VPE zum Erfassen mindestens eines Parameters der Kommunikation zwischen der Präsidentensprechstelle und den Delegiertensprechsteilen aufweisen. Die Verbindungsparametereinheit vergleicht die erfassten Parameter mit vorab eingestellten Schwellwerten. Wenn die erfassten Parameter der Kommunikation unter den Schwellwert fallen, dann wechselt die Präsidentensprechstelle die Frequenzkanäle für die Kommunikation mit den Delegiertensprechsteilen.

Die Präsidentensprechstelle kann ferner optional eine Funktionalitätssteuereinheit zum Steuern der Funktionalität des drahtlosen Konferenzsystems aufweisen. Diese Steuerung der Funktionalität kann in Abhängigkeit der Qualität der Uplink- und/oder Downlink- Kommunikation erfolgen. Hierbei wird die Funktionalität des drahtlosen Konferenzsystems reduziert, wenn die Qualität der Uplink- und/oder Downlink- Kommunikation nicht für die benötigte Betriebssicherheit ausreicht.

Zum Erhalt der Sprachverständlichkeit des Systems kann die drahtlose Kommunikation in ein nicht oder weniger gestörtes Frequenzband gewechselt werden. Sollte auch dieses Band störungsbehaftet sein, dann kann das System seine Funktionalität einschränken, um den bestimmungsgemäßen Betrieb aufrecht zu erhalten, die Redundanz der übertragenen Daten zu erhöhen.

Die Einschränkung der Funktionalität dient dann im Wesentlichen dazu, die Sprachverständlichkeit zu erhalten. Dazu können ausgewählte Datendienste reduziert oder weggelassen werden, das System kann auf eine andere, robustere Modulationsart wechseln oder sogar die zu übertragende Audiobandbreite ist zu reduzieren zum Erhalt der Sprachverständlichkeit. Eine weitere Maßnahme kann die Erhöhung der Sendeleistung des Systems oder ausgewählter Systemkomponenten darstellen. Da das System die zur Verfügung stehenden Frequenzbänder überwacht, können diese Maßnahmen zurückgenommen, dynamisch angepasst werden, sobald das Umfeld dies zulässt.

Für das Frequenzscannen kann die Präsidentensprechstelle über einen entsprechenden eigenen Empfänger verfügen. Wenn die Delegierteneinheiten aktiviert werden, dann führen sie ebenfalls einen Scan in vorab gespeicherten Frequenzbändern durch. Hierbei suchen die Delegiertensprechstellen nach Synchronisationsinformationen wie z. B. eine Synchronisationssequenz von der Präsidentensprechstelle. Falls die Synchronisationssequenz der Präsidentensprechstelle nicht gefunden wird, scannen die Delegiertensprechstellen beispielsweise zunächst das untere ISM-Band (Industrial, Scientific and Medical Band) ab. Wenn hier wiederum keine Synchronisationssequenz gefunden worden ist, dann können die Delegiertensprechstellen das obere ISM Band abscannen. Der Abscanvorgang kann solange wiederholt werden, bis eine Synchronisationssequenz der Präsidentensprechstelle von den Delegierteneinheiten DU gefunden wurde. Die Startfrequenz sowie die Wahl und Reihenfolge der alternativen Frequenzen können von dem Nutzer des drahtlosen Konferenzsystems frei konfiguriert werden, so dass eine Anpassung an die tatsächlichen örtlichen Gegebenheiten vorgenommen werden kann. Im laufenden Betrieb kann die Präsidentensprechstelle Qualitätsparameter für die Kommunikation wie beispielsweise den Signal-Rausch-Abstand (Signal-to-Noise Ratio, SNR oder Fehlerrate der Datenübertragung) der Uplink- und Downlink-Kommunikation mittels der Verbindungsparametereinheit erfassen und überprüfen. Dies kann kontinuierlich oder in regelmäßigen Intervallen erfolgen. Falls diese(r) Qualitätsparameter unter einen bestimmten vorab eingestellten Grenzwert fällt, dann kann die Präsidentensprechstelle ein anderes Frequenzband auswählen und dies den Delegiertensprechstellen beispielsweise mit Hilfe von Downlink-Steuerkanälen mitteilen. Die entsprechenden Delegiertensprechstellen können dann den oben beschriebenen Frequenzscanvorgang durchführen, bis sie eine entsprechende Synchronisationssequenz der Präsidentensprechstelle gefunden haben.

Erhalten die Delegiertensprechstellen aufgrund von Störungen nicht die Anweisung, in ein anderes Frequenzband zu wechseln, dann können sie bei Verlust der Verbindung zum Synchronisierimpuls entsprechend der Voreinstellungen die ausgewählten Frequenzbänder scannen, um die Verbindung wieder herzustellen.

Die Qualität der Uplink-Kommunikation kann beispielsweise von der Präsidentensprechstelle gemessen werden, während die Qualität der Downlink-Kommunikation durch die jeweiligen Delegiertensprechstellen gemessen bzw. überprüft wird. Wenn die Qualität der Downlink-Kommunikation zu schlecht wird bzw. ein Qualitätsparameter unter einen Schwellwert fällt, dann können die Delegiertensprechstellen der Präsidentensprechstelle mittels Uplink-Steuerkanälen mitteilen, dass ein Frequenzwechsel benötigt wird und die Präsidentensprechstelle kann einen entsprechenden Frequenzwechsel initiieren.

Der Vorgang des Frequenzscannens kann während des Betriebs wiederholt werden, um eine gewünschte Qualität der Datenübertragung sicherzustellen. Falls die Datenübertragung nicht der gewünschten Qualität entspricht, dann kann der Frequenzbereich der drahtlosen Kommunikation zu einem Frequenzbereich gewechselt werden, welcher eine betriebssichere drahtlose Kommunikation ermöglicht. Dazu kann ein Empfänger der Präsidentensprechstelle die in Frage kommenden Frequenzbänder nach Störern abscannen. Wenn keine Störer in den abgetasteten Frequenzbändern vorhanden sind, dann kann die Kommunikation auf dieses Frequenzband umgeschaltet werden. Der Empfänger der Präsidentensprechstelle kann dies sowohl unabhängig von dem gesamten System als auch in freien Zeitfenstern durchführen. Die Präsidentensprechstelle kann dazu ausgestaltet sein, eine automatische Auswahl der zu betrachtenden Frequenzbereiche durchzuführen. Diese Auswahl kann auf Voreinstellungen basieren. Dies ist insbesondere vorteilhaft, weil das System zunächst nur den bevorzugten Bereich nutzen kann und erst dann in einen anderen Frequenzbereich wechseln kann, wenn keine betriebssichere Übertragung mehr gewährleistet werden kann. Die Vorauswahl kann an die örtlichen Gegebenheiten angepasst werden.

Zum Betrieb des drahtlosen Konferenzsystems können Mehr-Antennensysteme vorgesehen sein, welche insbesondere hinsichtlich einer betriebssicheren Datenübertragung vorteilhaft sind.

Vorzugsweise kann die drahtlose Kommunikation auch mit einer Redundanz erfolgen, um beschädigte Dateien regenerieren zu können. Hierbei kann das Signal mehrfach gesendet werden, um beschädigte Signale erneut zu übertragen.

Zusammenfassend wurde ein Konferenzsystem und ein Verfahren zum Steuern des Konferenzsystems beschrieben, wobei Funktionen der Verwaltung und Steuerung des Konferenzsystems in eine vorbestimmte Sprechstelle, wie bspw. die Präsidentensprechstelle, integriert werden, so dass sich wesentliche Vereinfachungen für den Aufsteller des Systems erreichen lassen.

Gemäß dem ersten bis vierten Ausführungsbeispiel wird ein integriertes Konferenzsystem vorgesehen, wobei hier die Bezeichnung "integriert" beschreibt, dass Funktionen in einer Einheit des Konferenzsystems vereinigt werden, die zuvor üblicherweise auf mehrere zum Betrieb des Konferenzsystems notwendige Peripheriegeräte, wie bspw. die Zentrale ausgelagert wurden. Der Grund dafür war, dass die für die Ausführung dieser Funktionen notwendigen Komponenten meist in diesen Peripheriegeräten untergebracht waren.

Zum Teil hat es auch den Grund, dass zum Betrieb des Konferenzsystems ein Techniker herangezogen wurde, der diese Funktionen an diesen Geräten vor und auch während der Konferenz den Bedürfnissen der Konferenzteilnehmer angepasst hat. Die notwendigen Peripheriegeräte waren meist abseits der eigentlichen Konferenz aufgestellt oder eingebaut, außer Sichtweite der Konferenzteilnehmer.

Bei diesen Funktionen handelt es sich unter anderem neben der bereits im zweiten Ausführungsbeispiel beschriebenen Einstellung der Lautstärke und des Klanges der Konferenzsprechstellen bspw. zur Anpassung an das Raumgeräusch auch um die Einstellung der Anzahl gleichzeitig aktiver Mikrofone, der Art des Konferenzbetriebes: First-In-First-Out, Request etc., der Koordination des Konferenzablaufes abzuwickeln, der Frequenzkoordination zur Vermeidung von Kollisionen/Interferenzen, etc.

Gemäß einem Ausführungsbeispiel der Erfindung, welches auf einem der vorherigen Ausführungsbeispiele basieren kann, erfolgt eine automatische Frequenzauswahl und ein Monitoring der zulässigen Frequenzbänder, welche als Ausweis in Frage kommen. Ferner kann eine dynamische Reduktion der Funktionalität des Konferenzsystems zum Erhalt der Sprachverständlichkeit erfolgen. Hierzu können beispielhaft ausgewählte Datenübertragungen reduziert werden oder wegfallen, es kann ein Umschalten auf eine robustere Modulationsart erfolgen, ein Reduzieren der Audiobandbreite des Systems kann erfolgen und ein Weglassen von ausgewählten Dolmetscherkanälen kann erfolgen. Falls die ausgewählten Dolmetscherkanäle weggelassen werden, werden die weggelassenen gedolmetschten Sprachen automatisch auf ausgewählte verbliebene Sprachen geschaltet.

## Patentansprüche

1. Konferenzsystem, mit
einer Mehrzahl von Delegiertensprechstellen (DS)
einer Präsidentensprechstelle (PS),
**dadurch gekennzeichnet, dass** die Präsidentenstellesprechstelle eine Konferenz-Steuereinheit (KSE) zum Steuern des Betriebs des Konferenzsystems und/oder der Mehrzahl der Delegiertensprechstellen aufweist,
wobei die Präsidentensprechstelle (PS) dazu ausgestaltet ist, die Funktionalität des Konferenzsystems in Abhängigkeit der Qualität der Kommunikation zwischen der Präsidentensprechstelle (PS) und den Delegiertensprechstellen (DS) zu steuern und die Funktionalität des Konferenzsystems zu reduzieren, wenn die Qualität der Kommunikation nicht für die benötigte Betriebssicherheit des Konferenzsystems ausreicht.

2. Konferenzsystem nach Anspruch 1,
wobei die Konferenz-Steuereinheit (KSE) eine Lautstärkeeinstelleinheit (LE) zum Einstellen der Lautstärke und/oder eine Klangeinstelleinheit (KE) zum Einstellen des Klangs an mindestens einer der Mehrzahl von Delegiertensprechstellen (DS) aufweist.

3. Konferenzsystem nach Anspruch 2,
**dadurch gekennzeichnet, dass** eine für mindestens eine der Mehrzahl von Delegiertensprechstellen vorgenommene Lautstärke und/oder Klangeinstellung gespeichert wird.

4. Konferenzsystem nach einem der vorhergehenden Ansprüche,
**dadurch gekennzeichnet, dass** die Präsidentensprechstelle (PS) eine Drahtlos-Sende-/Empfangseinheit (AP) zur direkten Drahtloskommunikation mit den Delegiertensprechstellen (DS) aufweist.

5. Konferenzsystem nach Anspruch 4,
**dadurch gekennzeichnet, dass** die Konferenz-Steuereinheit (KSE) eine Frequenzmanagementeinheit (FM) zur Frequenzkoordination und zur Vermeidung von Kollisionen oder Interferenzen bei der Drahtloskommunikation aufweist.

6. Konferenzsystem nach einem der vorhergehenden Ansprüche,
**dadurch gekennzeichnet, dass** die Präsidentensprechstelle Mittel aufweist, durch die eine Anzahl der zu aktivierenden Mikrophone und/oder eine Art des Konferenzbetriebes einstellbar ist.

7. Konferenzsystem nach einem der vorhergehenden Ansprüche, wobei
die Präsidentensprechstelle und/oder die Delegiertensprechstellen (DS) eine Computerschnittstelle zur Kommunikation mit einem externen Computer aufweist.

8. Konferenzsystem nach einem der vorherigen Ansprüche, wobei
die Präsidentensprechstelle (PS) und/oder die Delegiertensprechstellen (DS) eine Schnittstelle zur Steuerung von externen Komponenten aufweist.

9. Konferenzsystem nach einem der vorherigen Ansprüche, wobei
die Präsidentensprechstelle (PS) ein Verbindungsparameter einmal zum Erfassen und Vergleichen von Verbindungsparametern der Kommunikation zwischen der Präsidentensprechstelle (PS) und den Delegiertensprechstellen (DS) aufweist, wobei die erfassten Verbindungsparameter mit vorab eingestellten Schwellwerten verglichen werden,
wobei die Frequenzkanäle für die Kommunikation zwischen der Präsidentensprechstelle (PS) und den Delegiertensprechstellen (DS) wechseln, wenn die Verbindungsparameter die vorab eingestellten Schwellwerte unter- oder überschreiten.

10. Verfahren zum Betrieb eines Konferenzsystems, mit einer Präsidentensprechstelle (PS) und einer Mehrzahl von Delegiertensprechstellen (DS), **gekennzeichnet durch** die Schritte:
Steuern des Betriebs des Konferenzsystems und/oder der Mehrzahl der Delegiertensprechstellen **durch** eine Konferenzsteuereinheit (KSE) in der Präsidentensprechstelle
Steuern der Funktionalität des Konferenzsystems in Abhängigkeit der Qualität der Kommunikation zwischen der Präsidentensprechstelle (PS) und den Delegiertensprechstellen (DS), und
Reduzieren der Funktionalität des Konferenzsystems, wenn die Qualität der Kommunikation nicht für die benötigte Betriebssicherheit des Konferenzsystems ausreicht.

## Claims

1. A conference system, comprising
a plurality of delegate stations (DS)
a chairman's station (PS),
**characterised in that** the chairman's station has a conference control unit (KSE) for controlling the operation of the conference system and/or the plurality of delegate stations,
wherein the chairman's station (PS) is configured to control the functionality of the conference system in dependence on the quality of the communication between the chairman's station (PS) and the delegate stations (DS) and to reduce the functionality of the conference system if the quality of the communication is not sufficient for the required operating reliability of the conference system.

2. A conference system according to claim 1,
wherein the conference control unit (KSE) has a volume adjusting unit (LE) for adjusting the volume and/or a tone adjusting unit (KE) for adjusting the tone at at least one of the plurality of delegate stations (DS).

3. A conference system according to claim 2,
**characterised in that** a volume and/or tone adjustment made for at least one of the plurality of delegate stations is stored.

4. A conference system according to any one of the preceding claims,
**characterised in that** the chairman's station (PS) has a wireless transmitting/receiving unit (AP) for direct wireless communication with the delegate stations (DS).

5. A conference system according to claim 4,
**characterised in that** the conference control unit (KSE) has a frequency management unit (FM) for frequency coordination and for avoiding collisions or interference in the wireless communication.

6. A conference system according to any one of the preceding claims,
**characterised in that** the chairman's station has means by which a number of the microphones to be activated and/or a mode of conference operation can be set.

7. A conference system according to any one of the preceding claims, wherein
the chairman's station and/or the delegate stations (DS) has or have a computer interface for communication with an external computer.

8. A conference system according to any one of the preceding claims, wherein
the chairman's station (PS) and/or the delegate stations (DS) has or have an interface for controlling external components.

9. A conference system according to any one of the preceding claims, wherein
the chairman's station (PS) has a connection parameter on the one hand for detecting and comparing connection parameters of the communication between the chairman's station (PS) and the delegate stations (DS), wherein the detected connection parameters are compared with pre-set thresholds,
wherein the frequency channels for the communication between the chairman's station (PS) and the delegate stations (DS) change if the connection parameters fall below or exceed the pre-set thresholds.

10. A method for operating a conference system comprising a chairman's station (PS) and a plurality of delegate stations (DS), **characterised by** the steps of:
controlling the operation of the conference system and/or the plurality of delegate stations by a conference control unit (KSE) in the chairman's station
controlling the functionality of the conference system in dependence on the quality of the communication between the chairman's station (PS) and the delegate stations (DS), and
reducing the functionality of the conference system if the quality of the communication is not sufficient for the required operating reliability of the conference system.

## Revendications

1. Système de conférence, doté de :
une pluralité de postes de délégué (DS)
un poste de président (PS),
**caractérisé en ce que** le poste de président comporte une unité de commande de conférence (KSE) destinée à la commande du fonctionnement du système de conférence et/ou de la pluralité de postes de délégué,
dans lequel le poste de président (PS) est conçu pour commander la fonctionnalité du système de conférence en fonction de la qualité de la communication entre le poste de président (PS) et les postes de délégué (DS) et pour réduire la fonctionnalité du système de conférence lorsque la qualité de la communication est insuffisante pour la sécurité de fonctionnement nécessaire du système de conférence.

2. Système de conférence selon la revendication 1,
dans lequel l'unité de commande de conférence (KSE) comporte une unité de réglage de volume (LE) destinée au réglage du volume et/ou une unité de réglage de tonalité (KE) destinée au réglage de la tonalité d'au moins un poste de la pluralité de postes de délégué (DS).

3. Système de conférence selon la revendication 2,
**caractérisé en ce qu'**un réglage de volume et/ou de tonalité réalisé pour au moins un poste de la pluralité de postes de délégué est enregistré.

4. Système de conférence selon l'une quelconque des revendications précédentes,
**caractérisé en ce que** le poste de président (PS) comporte une unité d'émission-réception sans fil (AP) destinée à la communication sans fil directe avec les postes de délégué (DS).

5. Système de conférence selon la revendication 4,
**caractérisé en ce que** l'unité de commande de conférence (KSE) comporte une unité de gestion de fréquences (FM) destinée à coordonner les fréquences et à éviter des collisions ou des interférences lors de la communication sans fil.

6. Système de conférence selon l'une quelconque des revendications précédentes,
**caractérisé en ce que** le poste de président comporte des moyens qui permettent de régler un certain nombre de microphones à activer et/ou un type de fonctionnement de la conférence.

7. Système de conférence selon l'une quelconque des revendications précédentes, dans lequel
le poste de président et/ou les postes de délégué (DS) comportent une interface d'ordinateur destinée à la communication avec un ordinateur externe.

8. Système de conférence selon l'une quelconque des revendications précédentes, dans lequel
le poste de président (PS) et/ou les postes de délégué (DS) comportent une interface destinée à la commande de composants externes.

9. Système de conférence selon l'une quelconque des revendications précédentes, dans lequel
le poste de président (PS) comporte une unité de gestion de paramètres de liaison destinée à détecter et comparer des paramètres de liaison de la communication entre le poste de président (PS) et les postes de délégué (DS), dans lequel les paramètres de liaison détectés sont comparés à des valeurs de seuils réglées au préalable,
dans lequel les canaux de fréquence pour la communication entre le poste de président (PS) et les postes de délégué (DS) varient lorsque les paramètres de liaison deviennent inférieurs ou supérieurs aux valeurs de seuils réglées au préalable.

10. Procédé de fonctionnement d'un système de conférence, doté d'un poste de président (PS) et d'une pluralité de postes de délégué (DS), **caractérisé par** les étapes suivantes :
la commande du fonctionnement du système de conférence et/ou de la pluralité des postes de délégué par une unité de commande de conférence (KSE) dans le poste de président
la commande de la fonctionnalité du système de conférence en fonction de la qualité de la communication entre le poste de président (PS) et les postes de délégué (DS), et
la réduction de la fonctionnalité du système de conférence lorsque la qualité de la communication n'est pas suffisante pour la sécurité de fonctionnement nécessaire du système de conférence.
